# EUROPÄISCHE PATENTSCHRIFT

(11) **EP 0 904 214 B1**
(45) Veröffentlichungstag und Bekanntmachung des Hinweises auf die Patenterteilung: **05.02.2003**
(21) Anmeldenummer: 98917039.4
(22) Anmeldetag: 21.03.1998
(51) Int. Cl.: B60N 2/44

(54) **RÜCKENSTÜTZE FÜR LEHNEN, INSBESONDERE FÜR KRAFTFAHRZEUGSITZEN**
BACK SUPPORT FOR SEAT BACKS, IN PARTICULAR FOR MOTOR VEHICLE SEATS
APPUI-DOS POUR DOSSIERS, NOTAMMENT POUR DOSSIERS DE SIEGES AUTOMOBILE

(30) Priorität: 10.04.1997 DE 29706398 U
(43) Veröffentlichungstag der Anmeldung: 31.03.1999
(73) Patentinhaber: MöllerTech S.A., 01470 Amurrio (ES)
(72) Erfinder: VON MÖLLER, Moritz, D-33649 Bielefeld (DE)
(74) Vertreter: Thielking, Bodo, Dipl.-Ing.
(86) Internationale Anmeldenummer: EP9801654
(87) Internationale Veröffentlichungsnummer: WO98045137

(56) Entgegenhaltungen:
- WO-A-94/08492
- DE-A- 4 314 325
- US-A- 5 314 236
- US-A- 5 567 011

## Beschreibung

### TECHNISCHES GEBIET

Die Erfindung betrifft eine Rückenstütze für Lehnen nach dem Oberbegriff des Anspruchs 1.

### STAND DER TECHNIK

Bei derartigen Rückenlehnen ist es bekannt, die Wölbung der Stützplatte über einen Antriebsmotor so zu verstellen, daß der Scheitel der Stützplatte mehr oder weniger weit nach vorn in Richtung auf den Rücken des Benutzers steht (US-A-5,567,011). Bei der bekannten Rückenlehne ist hinter der Stützplatte lediglich ein Antriebsmotor zur Erzeugung unterschiedlicher Krümmungen vorgesehen. Die Höhenverstellung der Stützplatte erfolgt über mehrfach umgelenkte Seilzüge, deren Enden auf eine elektrisch angetriebene Windentrommel aufgewickelt werden. Eine solche Ausbildung kann aufwendig und nicht praxisgerecht sein, weil in der Praxis kein Einbauraum für eine ungestörte Führung der Seilzüge zur Verfügung steht.

### DIE ERFINDUNG

Ausgehend von diesem Stand der Technik liegt der Erfindung die Aufgabe zugrunde, eine Rückenlehne der als bekannt vorausgesetzten Art so auszubilden, daß der Antrieb so klein baut, daß er vollständig hinter der Wölbung der Stützplatte untergebracht werden kann.

Die Lösung dieser Aufgabe erfolgt mit den Merkmalen des Kennzeichnungsteils von Anspruch 1.

Zusätzlich zu einem motorischen Antrieb nur für die Wölbung der Stützplatte ist es in gleicher Weise auch möglich, einen zusätzlichen motorischen Antrieb für die Höhenverstellung der Stützplatte vorzusehen.

Bevorzugte Ausführungsformen der Erfindung ergeben sich aus den Unteransprüchen.

### KURZBESCHREIBUNG DER ZEICHNUNGSABBILDUNG

In der Zeichnung zeigt:

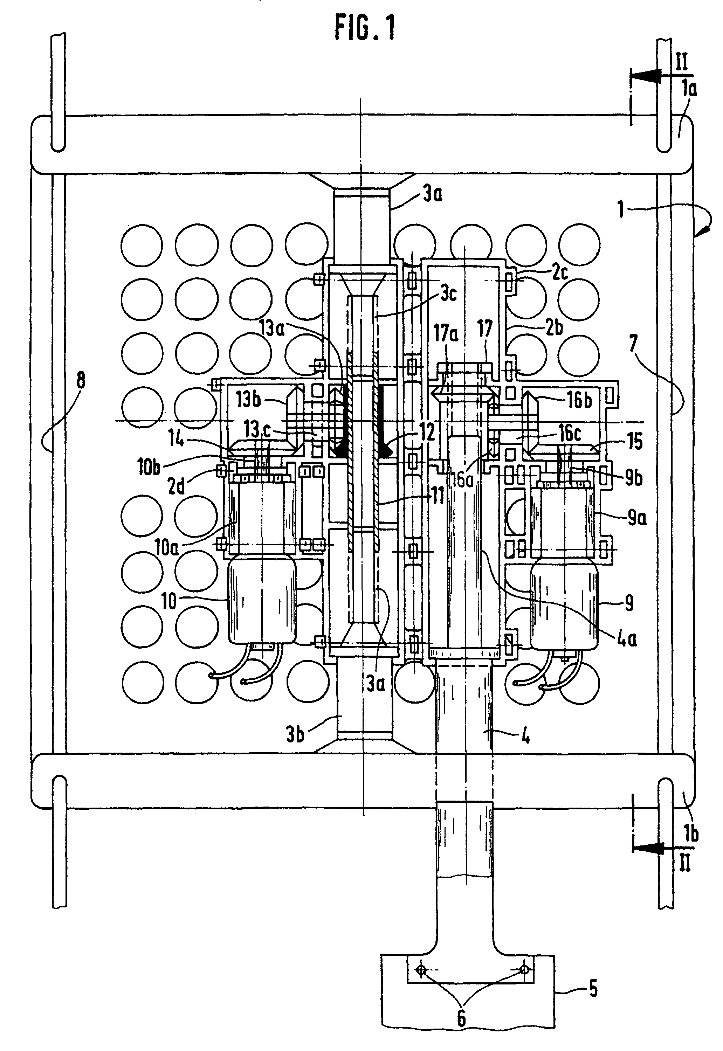

- Figur 1 -: eine Rückansicht auf die Stützplatte mit Antrieb bei abgenommenem Gehäusedeckel,

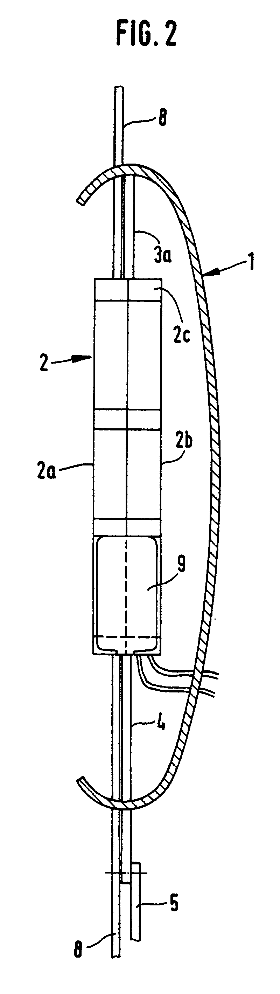

- Figur 2 -: eine schematische Schnittdarstellung entlang Schnittebene II-II in Figur 1.

### BESTER WEG ZUR AUSFÜHRUNG DER ERFINDUNG

Mit 1 ist eine gewölbte Stützplatte bezeichnet, die sich in Richtung des Benutzers vorwölbt. Die Wölbung ist dadurch einstellbar, daß die Laschenbereiche 3a und 3b, welche an den nach hinten abgekröpften oberen und unteren Endbereichen der Stützplatte 1 befestigt sind, mehr oder weniger großen Abstand voneinander halten.

Die Stützplatte 1 ist auf Führungselementen höhenverschieblich geführt, welche im dargestellten Ausführungsbeispiel Führungsdrähte 7 und 8 sind, welche die oberen und unteren Endbereiche 1a und 1b jeweils durchsetzen. Die Führungsdrähte 7 und 8 sind ebenso an der Lehne befestigt, wie eine Lasche 4, die über nicht dargestellte Befestigungselemente mit einem lehnenfesten Bereich 5 verbunden ist. Die Lasche 4 dient zur Höhenverstellung der Stützplatte 1.

Die Verstellung der Wölbung erfolgt durch ein Verdrehen einer Hülse 11, welche gegenläufig steigende Innengewindebereiche aufweist, die entsprechend ausgebildete Außengewindebereiche 3c bzw. 3d der Laschen 3a und 3b umgreifen.

Die Höhenverstellung erfolgt durch ein Verdrehen einer Hülse 14, die mit ihrem Innengewinde das Außengewinde 4a der lehnenfesten Lasche 4 umgreift.

Der Antrieb der beiden Hülsen 11 und 17 erfolgt mittels Antriebsmotoren 10 und 9.

Dem Antriebsmotor 10 ist ein Untersetzungsgetriebe 10a nachgeordnet, an dessen Ausgangswelle 10b ein Kegelrad 14 befestigt ist. Das Kegelrad 14 greift in ein Kegelrad 13b mit einem mittleren Bereich 13c, an dem ein weiteres Kegelrad 13a sitzt. Dieses weitere Kegelrad steht im Eingriff mit einem äußeren Kegelradbereich 12 der Hülse 11.

Parallel zum Motor 10 ist ein Motor 9 angeordnet, der ebenfalls ein Untersetzungsgetriebe 9a aufweist, das eine Ausgangswelle 9b besitzt. Auf der Ausgangswelle 9b sitzt ein Kegelrad 15, das mit einem Kegelrad 16b kämmt, das über einen kreiszylindrischen Bereich 16c mit einem Kegelrad 16a verbunden ist. Das Kegelrad 16a steht im Eingriff mit einem auf der Hülse 17 festen Kegelrad 17a. Entsprechend der Drehrichtung der Antriebsmotoren 9 und 10 werden die Hülsen 11 und 17 in unterschiedliche Richtungen gedreht mit der Folge, daß bei Hülse 11 die Wölbung mehr oder weniger stark verändert wird und bei Hülse 17 diese mehr oder weniger weit auf dem Gewindebereich 4a wandert, so daß sich eine Höhenverstellung ergibt.

Das Getriebegehäuse besteht aus zwei gleich ausgebildeten Gehäusehälften 2a und 2b, die über Zapfen 2d und Ösen 2c in Verschließlage miteinander verrastbar sind.

## Patentansprüche

1. Rückenstütze für Lehnen, insbesondere von Kraftfahrzeugsitzen, mit einer vorwärts gekrümmten Stützplatte (1), die höheneinstellbar auf lehnenfesten Führungsorganen aufwärts und abwärts verfahrbar sowie in ihrer Krümmung mittels einer motorisch angetriebenen, verlängerbaren bzw. verkürzbaren Zuglasche veränderbar ist, wobei die Zuglasche aus an oberen (1a) und unteren Endbereichen (1b) der Stützplatte (1) angreifenden Laschenbereichen (3a; 3b) besteht, die aufeinander zu weisende, gegensinnig steigende Gewindebereiche besitzen, die von einer gemeinsamen, mit entsprechend ausgebildeten Gegenbereichen versehenen, drehbar ausgebildeten Hülse (11) umgriffen werden, wobei der Antriebsmotor (10) an einem hinter der Stützplatte (1) angeordneten Getriebegehäuse (2) fixiert ist und der Motor (10) Getrieberäder eines Getriebes antreibt, dessen letztes Getrieberad (13a) im Eingriff mit der Hülse (11) steht, die gegenläufige Innengewindebereiche aufweist, wobei außer dem Antriebsmotor (10) für die Krümmungsverstellung ein weiterer Antriebsmotor (9) für die Höhenverstellung vorgesehen ist,
**dadurch gekennzeichnet,**
**daß** die Motoren (9; 10) parallel zueinander angeordnet und beide Motoren an dem Getriebegehäuse (2) fixiert sind, wobei beide Motoren (9; 10) jeweils Getrieberäder eines Getriebes antreiben und das letzte Getrieberad (13a) des einen Getriebes im Eingriff mit der Hülse (11) steht, die gegenläufige Innengewindebereiche aufweist, und wobei das letzte Getrieberad des anderen Getriebes im Eingriff mit einer zweiten Hülse (17) steht, die drehbar gelagert ist und ein Innengewinde trägt, das im Eingriff mit einem Außengewinde (4a) steht, das auf einer in Höhenverstellrichtung weisenden, lehnenfesten Lasche (4) angeordnet ist.

2. Rückenstütze nach Anspruch 1,
**dadurch gekennzeichnet,**
**daß** die Motorwellen der Antriebsmotoren (9; 10) zueinander parallel verlaufen und sich in Höhenverstellrichtung erstrecken.

3. Rückenstütze nach Anspruch 2,
**dadurch gekennzeichnet,**
**daß** den Antriebsmotoren (9; 10) Untersetzungsgetriebe (9a; 10a) nachgeordnet sind, deren Abtriebswellen (9b; 10b) mit der Motorwelle fluchten, wobei die Abtriebswellen (9b; 10b) Kegelräder (15; 14) tragen, die mit dazu senkrecht stehenden Kegelrädern (16b; 13b) kämmen, welche über Hülsenbereiche (16c; 13c) mit Kegelrädern (16a; 13a) verbunden sind, deren eines (16a) mit einem auf der zweiten Hülse (17) festen Kegelrad (17a) kämmt und deren anderes mit einem auf der ersten Hülse (11) festen Kegelrad (12) kämmt.

4. Rückenstütze nach Ansprüchen 2 oder 3,
**dadurch gekennzeichnet,**
**daß** das Getriebegehäuse (2) aus zwei gleich ausgebildeten, sich im wesentlichen parallel zu der Stützplatte (1) erstreckenden Gehäusehälften (2a; 2b) besteht, die über angeformte Rastlaschen (2d) und angeformte komplementäre Rastösen (2c) zur Bildung eines geschlossenen Gehäuses miteinander verrastbar sind.

## Claims

1. Back support for backrests, in particular of motor vehicle seats, with a support plate (1) curved forwards which can be guided upwards and downwards in a height adjustable way on guide members secure in the backrest as well as being changed in its curvature by means of a motor driven traction tab which can be extended or shortened wherein the traction tab consists of tab areas (3a; 3b) engaging on upper (1a) and lower end areas (1b) of the support plate (1), which have threaded areas pointing towards each other and rising in opposite directions, wherein the same are surrounded by a bush (11) formed in a rotatable way provided with correspondingly formed opposite areas wherein the drive motor (10) is fixed on gearbox housing (2) arranged behind the support plate (1) and the motor (10) drives gearwheels of a gearbox, of which the last gearwheel (13a) is in contact with the bush (11) which has opposite-running internal thread areas wherein besides the drive motor (10) for the curvature adjustment a further drive motor (9) is provided for the height adjustment
**characterised in that**
the motors (9; 10) are arranged parallel to each other and the two motors are fixed on the gearbox housing (2) wherein the two motors (9; 10) respectively drive gearwheels of gearboxes and the last gearwheel (13a) of one set of gears is in contact with the bush (11) which has opposite-running internal thread areas and wherein the last gearwheel of the other set of gears is in contact with a second bush (17) which is mounted in a rotatable way and bears an internal thread which is in engagement with an external thread (4a) which is arranged on a tab (4) fixed to the backrest and extending in the height adjustment direction.

2. Back support according to claim 1,
**characterised in that**
the motor shafts of the drive motors (9; 10) run parallel to each other and extend in the height adjustment direction.

3. Back support according to claim 2,
**characterised in that**
reduction gears (9a; 10a) are positioned after the drive motors (9; 10) and the output shafts (9b; 10b) of these reduction gears (9a; 10a) are aligned with the motor shaft wherein the output shafts (9b; 10b) bear bevel wheels (15; 14) which intermesh with bevel wheels (16b; 13b) positioned perpendicular to the same which are connected by means of bush areas (16c; 13c) with bevel wheels (16a; 13a), of which one intermeshes with a bevel wheel (17a) fixed on the second bush (17) and of which the other intermeshes with a bevel wheel (12) fixed on the first case (11).

4. Back support according to claims 2 or 3,
**characterised in that**
the gear housing (2) consists of two halves of gear housing (2a; 2b) formed in the same way extending essentially parallel to the support plate (1) wherein the two halves (2a; 2b) can be engaged with each other by means of engagement tabs (2d) formed on them and complementary engagement lugs (2c) formed on them in order to form closed housing.

## Revendications

1. Appui-dos pour dossier, notamment de sièges de véhicules automobiles, avec une plaque d'appui courbée en avant (1) qui peut être déplacée, réglable dans le sens de la hauteur par mouvement ascendant et descendant, sur des organes de guidage, et dont la courbure peut être modifiée à l'aide d'une tirette qui est commandée par moteur et peut être allongée et raccourcie, ladite tirette comprenant des secteurs de languettes (3a ; 3b) qui attaquent les zones d'extrémités supérieures (1a) et inférieures (1b) de la plaque d'appui (1) et sont pourvus de zones à filetages opposés qui sont saisies par une douille (11) commune, pivotante, présentant des contreparties conçues adéquatement, le moteur de commande (10) étant fixé à un carter d'engrenage (2), qui est disposé derrière la plaque d'appui (1), et ledit moteur (10) entrainant les roues d'un engrenage dont la dernière roue d'engrenage (13a) est en prise avec la douille (11) qui présente des secteurs à filetage intérieur, inverse, un autre moteur de commande (9) étant prévu pour le réglage en hauteur, outre le moteur de commande (10) du réglage de la courbure,
**caractérisé en ce que**
les moteurs (9 ; 10) sont disposés parallèlement par rapport l'un à l'autre et fixés, tous les deux, au carter d'engrenage (2), les deux moteurs (9 ; 10) entraînant chacun les roues d'un engrenage et la dernière roue d'engrenage (13a) de l'un des engrenages étant en prise avec la douille (11) qui présente des secteurs à filetage opposé, et la dernière roue d'engrenage de l'autre engrenage étant en prise avec une deuxième douille (17) qui est montée rotative et présente un filet intérieur qui est en prise avec un filet extérieur (4a), lequel équipe une tirette (4) solidaire du dossier qui est dirigée dans le sens du réglage en hauteur.

2. Appui-dos selon la revendication 1,
**caractérisé en ce que**
les arbres des moteurs de commande (9 ; 10) sont disposés parallèlement par rapport l'un à l'autre et s'étendent dans le sens du réglage en hauteur.

3. Appui-dos selon la revendication 2,
**caractérisé en ce que**
des réducteurs de vitesse (9a; 10a), dont les arbres de sortie (9b ; 10b) sont en alignement avec l'arbre du moteur, sont disposés en aval des moteurs de commande (9 ; 10), les arbres de sortie (9b ; 10b) portant des roues coniques (15, 14) qui s'engrènent avec des roues coniques (16b. 13b) qui sont disposées perpendiculairement par rapport à elles et sont reliées, par l'intermédiaire de secteurs de douilles (16c ; 13c), à des roues coniques (16a ; 13a), dont l'une (16a) s'engrène avec une roue conique (17a) fixée sur la deuxième douille (17), tandis que l'autre s'engrène avec une roue conique (12) fixée sur la première douille (11).

4. Appui-dos selon les revendications 2 ou 3,
**caractérisé en ce que**
le carter d'engrenage (2) est composé de deux moitiés de carter (2a ; 2b) de conception semblable, essentiellement parallèles à la plaque d'appui (1) qui, pour l'obtention d'un carter fermé, peuvent être enclenchées ensemble, à l'aide de languettes d'arrêt (2d) et d'oreilles complémentaires (2c), formées d'une pièce à partir desdites moitiés de carter.
